# EUROPEAN PATENT APPLICATION

(11) **EP 4 800 263 A1**
(43) Date of publication of application: **02.09.2026**
(21) Application number: 26160870.7
(22) Date of filing: 26.02.2026
(51) Int. Cl.: F16G 13/08, F16G 13/20, F16G 13/04

(54) **INTERLOCKING CHAIN**

(30) Priority: 26.02.2025 JP 2025029051
(71) Applicant: Tsubakimoto Chain Co., Osaka 530-0005 (JP)
(72) Inventor: Takagi, Yudai, Osaka, 530-0005 (JP); Miyanaga, Shouta, Osaka, 530-0005 (JP)
(74) Representative: dompatent

(57) **Abstract**

The present invention provides an interlocking chain (110) capable of withstanding high localized tensile loads, reducing frictional losses and engagement noise, improving operational safety, and extending service life. The chain includes a pair of reciprocally driven inner and outer chain members (120, 130) that engage with each other to unite. The connecting pins (125) of the inner chain member are spaced apart by a first distance (P1), and the connecting pins (135) of the outer chain member are spaced apart by a second distance (P2), the first distance being smaller than the second distance. At least one of the inner chain member and the outer chain member includes specific pairs of link plates (122,132) whose combined plate thickness measured in the chain width direction is smaller in an interlocking portion (111) than a combined plate thickness measured in the chain width direction in a connecting portion (115).

## Description

### BACKGROUND OF THE INVENTION

### 1. Field of the Invention

The present invention relates to an interlocking chain having at least one pair of reciprocally movable chain members that engage with each other to unite when moving forward, and disengage from each other to separate when moving backward.

### 2. Description of the Related Art

Interlocking chains composed of multiple pairs of reciprocally movable chain members that engage with each other to unite when moving forward and disengage from each other to separate when moving backward have been known.

One of such known interlocking chains, hereinafter referred to as "arc chain," enables a movable member coupled to one end in the forward direction of the chain to move along a curved path (see, for example, Japanese Patent No. 6814861). An arc chain uses a pair of chain members, one of which is composed of link plates having a relatively smaller distance between the centers of paired pin holes. When the pair of chain members engage each other as they move forward, they unite into a curved shape, with the chain member having the smaller inter-pin distance positioned on the inner side of the arc. The interlocking chain is thus able to reciprocate along a curved path with a predetermined radius of curvature according to its arc shape.

### SUMMARY OF THE INVENTION

Linear interlocking chains are designed to transmit load between link plates in the extending direction without bearing load on connecting pins, thereby enabling the generation of a large force in the compressing direction.

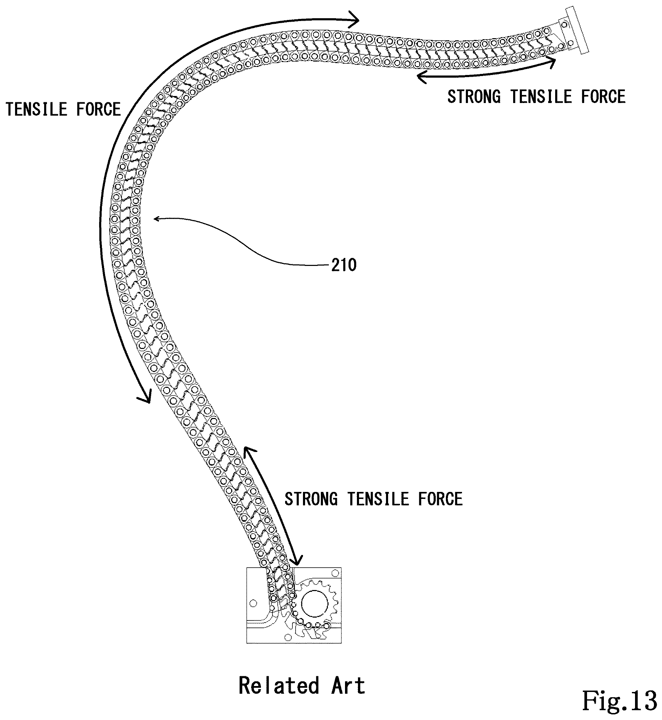

However, an interlocking chain that is extended in a curved shape, such as the arc chain, undergoes bending deformation as it is extended, due to an increasing angle between the extending direction and the direction of the load at the distal end. As a result, as shown in FIG. 13, which depicts an arc chain 210 with an exaggerated bending deformation, the chain is subjected to not only compression but also localized tension. Specifically, the arc chain 210 experiences excessive tensile stress around the pin holes at certain localized portions in the reciprocating direction. This could have a significant impact on the durability of the arc chain 210.

Hook portions of the link plates serve as the elements that bear the compression load. In an arc chain, the hook portions are subjected to a relatively smaller compression load.

Therefore, providing hook portions on all of the link plates, as in the interlocking chain described in Japanese Patent No. 6814861, results in an over-engineered structure. The hook portions provided more than necessary increase weight and resistance during engagement, raising the thrust required to extend and contract the chain, and result in a higher motor load.

When employed in a drive unit for opening and closing truck wing doors, for example, the interlocking chain included in a movable-member actuator, which is installed in an upper part of the truck body, raises the center of gravity of the truck. Therefore, when the truck makes turns or S-turns, or is subjected to a blast or gust of wind, a heavy movable-member actuator including the interlocking chain may increase the moment generated by lateral loads on the truck, thereby increasing the risk of truck tip-overs.

The present invention resolves these issues and aims to provide an interlocking chain capable of withstanding high localized tensile loads, reducing frictional losses and engagement noise, improving operational safety, and extending service life.

The present invention provides an interlocking chain including at least a pair of reciprocally movable inner and outer chain members that engage with each other to unite when moving forward, and disengage from each other to separate when moving backward. The paired inner and outer chain members are each made up of a plurality of first link plates, each having a pair of first pin holes arranged along a reciprocating direction, and a plurality of second link plates, each having a pair of second pin holes arranged along the reciprocating direction. The first link plates and the second link plates are serially arranged and pivotably connected together by connecting pins passed through the first pin holes and the second pin holes, with the first pin hole on one side in each of the first link plates overlapping the second pin hole on the other side in each of the second link plates that are adjacent in the reciprocating direction. The connecting pins of the inner chain member are spaced apart along the reciprocating direction by a first distance, and the connecting pins of the outer chain member are spaced apart along the reciprocating direction by a second distance, the first distance being smaller than the second distance. At least one of the paired inner and outer chain members includes specific link plate pairs of the first link plates and the second link plates adjoining each other in the reciprocating direction, whose combined plate thickness, measured in a chain width direction, is smaller in an interlocking portion where the paired inner and outer chain members engage than a combined plate thickness measured in the chain width direction in a connecting portion where the link plates are connected together by the connecting pins.

According to the present invention, each link plate of the inner chain member and the outer chain member basically has a sufficient plate thickness in the connecting portion to provide the effect of reducing stress generated around the first pin holes and second pin holes of respective link plates of the inner and outer chain members. In addition, the chain members include specific pairs of link plates whose combined plate thickness measured in the chain width direction is smaller in the interlocking portion than the combined plate thickness measured in the chain width direction in the connecting portion. This helps reduce the contact area between one chain member and the other chain member in their respective interlocking portions, thereby enabling the reduction of friction as well as engagement noise.

Moreover, the chain members can be made lighter, thereby reducing the thrust required from the drive source to reciprocate the interlocking chain. The reduced load extends the service life of the drive source, and enables the use of a smaller drive source, allowing the movable-member actuator itself, which uses the interlocking chain, to be made lighter. When employed in a drive unit for opening and closing truck wing doors, for example, the lighter interlocking chain can reduce the moment generated by lateral loads on the trucks, thereby minimizing the risk of truck tip-overs and ensuring operational safety.

The specific link plates are configured by link plates designed to have a smaller plate thickness in their hook portions than the plate thickness in their plate bodies, so that the paired inner and outer chain members, when they are united, can stably sustain their curved engagement state.

The first link plates and second link plates, having different plate thicknesses, are designed so that the combined surface contact area between the interlocking first link plates of the outer chain member and the inner chain member is equal to the combined surface contact area between the interlocking second link plates of the outer chain member and the inner chain member, without changing the side profiles of the plates. This design allows the first link plates and the second link plates to have equal load capacity, enabling the chain as a whole to exhibit high compression load capacity and to maximize the drive force relative to its occupied area.

The center axes of the connecting pins of the inner chain member are spaced from an edge of the inner chain member on a side opposite to the outer chain member by a third distance, the center axes of the connecting pins of the outer chain member are spaced from an edge of the outer chain member on a side opposite to the inner chain member by a fourth distance, and the third distance is greater than the fourth distance. This design enhances the tensile load capacity of the inner chain member and prevents damage even when the inner chain member is significantly curved or substantially extended in applications where it may be subjected to a high localized tensile force near the ends of the curved section.

### BRIEF DESCRIPTION OF THE DRAWINGS

FIG. 1 is a perspective view illustrating an example configuration of a movable-member actuator that uses the interlocking chain according to one embodiment of the present invention when the chain is extended;
FIG. 2 is an enlarged front view illustrating a configuration in the vicinity of the drive unit of the movable-member actuator shown in FIG. 1;
FIG. 3 is a perspective view illustrating a partial configuration of the interlocking chain when engaged as viewed from the side of the inner chain member;
FIG. 4 is a perspective view illustrating a partial configuration of the interlocking chain when engaged as viewed from the side of the outer chain member;
FIG. 5 is an exploded perspective view illustrating a configuration of the inner chain member;
FIG. 6 is an exploded perspective view illustrating a configuration of the outer chain member;
FIG. 7 is an illustrative diagram showing the first distance between the center axes of adjacent connecting pins of the inner chain member, and the second distance between the center axes of adjacent connecting pins of the outer chain member;
FIG. 8 is an illustrative diagram for explaining respective thicknesses of the link plates forming specific link plate pairs in the inner chain member;
FIG. 9 is an illustrative diagram for explaining respective thicknesses of the link plates forming specific link plate pairs in the outer chain member;
FIG. 10 is a perspective view illustrating a partial configuration of the interlocking chain when engaged according to another embodiment of the present invention;
FIG. 11 is an illustrative diagram for explaining respective thicknesses of the link plates forming specific link plate pairs in the inner chain member;
FIG. 12 is an illustrative diagram for explaining respective thicknesses of the link plates forming specific link plate pairs in the outer chain member; and
FIG. 13 is an illustrative diagram illustrating a bending deformation of the interlocking chain in an exaggerated manner.

### DESCRIPTION OF THE PREFERRED EMBODIMENTS

An interlocking chain according to one embodiment of the present invention, and a movable-member actuator that uses the interlocking chain to drive the movable member will be described with reference to the drawings. Note, the present invention is not limited to the embodiments below.

A "reciprocating direction" hereinafter refers to the direction in which the interlocking chain extends. A "width direction" refers to the direction along the center axes of connecting pins. "Front and back," "forward and backward," "back and forth" etc. hereinafter refer to forward and backward in terms of the "reciprocating direction."

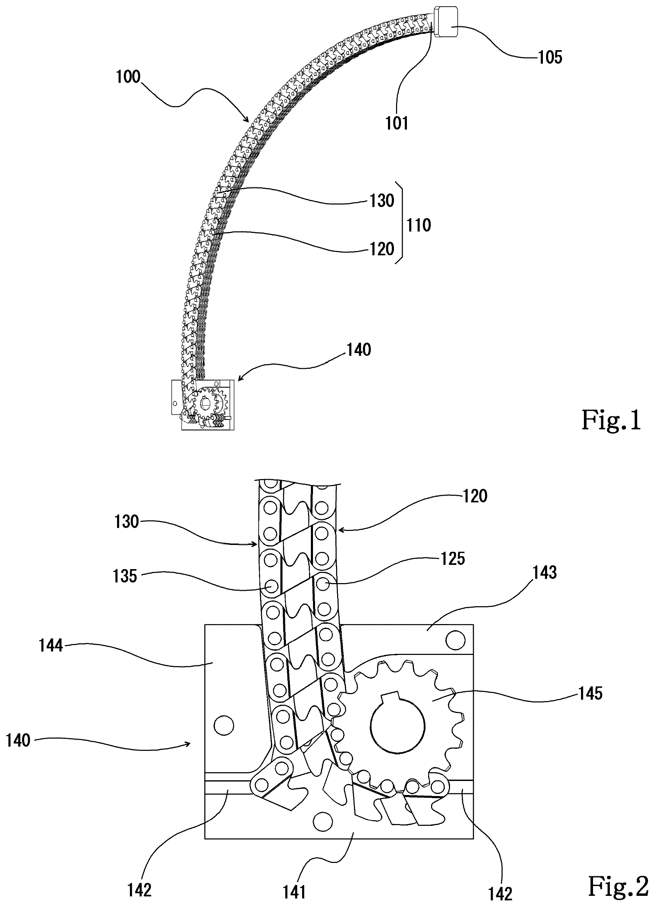

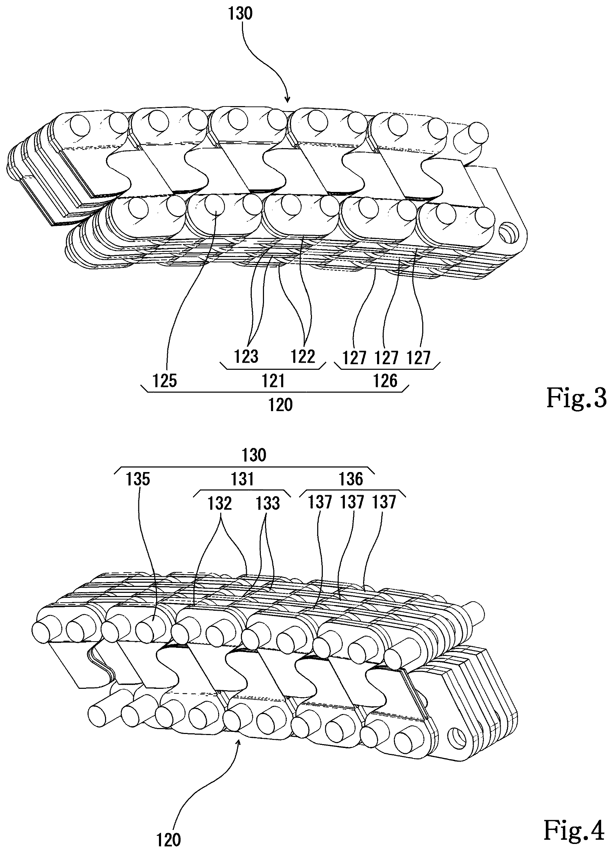

As shown in FIG. 1 through FIG. 4, the movable-member actuator 100 includes an interlocking chain 110 reciprocally movable along a curved path having a predetermined radius of curvature, a drive unit 140 fixedly placed at the base end of the interlocking chain 110, and a movable member 105 coupled to a distal end portion of the interlocking chain 110 via a joint link 101.

The interlocking chain 110 includes a pair of an inner chain member 120 and an outer chain member 130 that engage each other.

As the pair of inner chain member 120 and outer chain member 130 move in the forward direction, they unite by engaging each other and form the interlocking chain 110. When the inner chain member 120 and outer chain member 130 move in the backward direction, they disengage from each other into separate strands.

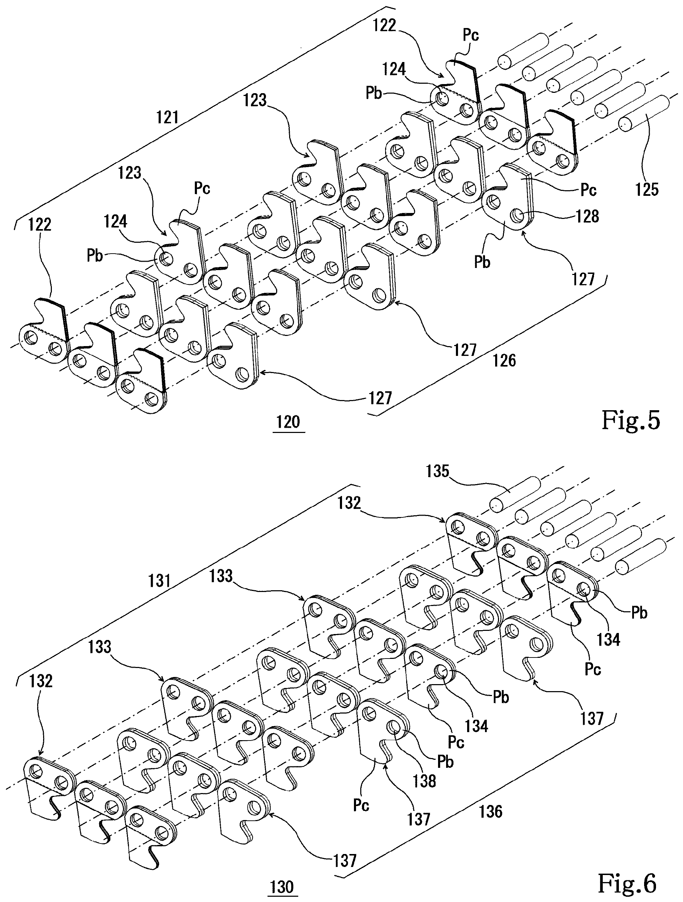

The inner chain member 120 is made up of first link plates 121 and second link plates 126. As shown in FIG. 5, the first link plates 121 include pairs of outer plates 122 arranged in the width direction, and plural rows of middle plates 123 arranged between the pairs of outer plates 122, each of the outer and middle plates having a pair of front and back pin holes (first pin holes) 124. The second link plates 126 include plural rows of inner plates 127, each of which has a pair of front and back pin holes (second pin holes) 128.

The outer plates 122, middle plates 123, and inner plates 127 of the inner chain member are serially arranged and pivotably connected together by connecting pins 125 passed through the first pin holes 124 and second pin holes 128, with the first pin holes 124 on one side in each of the outer plates 122 and middle plates 123 overlapping the second pin holes 128 on the other side in each of the inner plates 127 that are adjacent in the reciprocating direction. The first link plates 121 and second link plates 126 can thus alternately articulate in the reciprocating direction.

The connecting pins 125 are provided such as to protrude from both sides in the width direction.

The outer plates 122, middle plates 123, and inner plates 127 of the inner chain member 120 each have the same outer contour. Each link plate includes a substantially rectangular plate body Pb having a circular arc end on either side in the reciprocating direction, and a hook portion Pc continuously formed on one edge of the plate body Pb on the side facing the outer chain member 130, the hook facing the forward direction. The outer plates 122 and middle plates 123 have the pairs of first pin holes 124 in their plate bodies Pb, and the inner plates 127 have the pairs of second pin holes 128 in their plate bodies Pb.

The outer chain member 130 is made up of first link plates 131 and second link plates 136. As shown in FIG. 6, the first link plates 131 include pairs of outer plates 132 arranged in the width direction, and plural rows of middle plates 133 arranged between the pairs of outer plates 132, each of the outer and middle plates having a pair of front and back pin holes (first pin holes) 134. The second link plates 136 include plural rows of inner plates 137, each of which has a pair of front and back pin holes (second pin holes) 138.

The outer plates 132, middle plates 133, and inner plates 137 of the outer chain members are serially arranged and pivotably connected together by connecting pins 135 passed through the first pin holes 134 and second pin holes 138, with the first pin holes 134 on one side in each of the outer plates 132 and middle plates 133 overlapping the second pin holes 138 on the other side in each of the inner plates 137 that are adjacent in the reciprocating direction. The first link plates 131 and second link plates 136 can thus alternately articulate in the reciprocating direction.

The connecting pins 135 are provided such as to protrude from both sides in the width direction.

The outer plates 132, middle plates 133, and inner plates 137 of the outer chain member 130 each have the same outer contour. Each link plate includes a substantially rectangular plate body Pb having a circular arc end on either side in the reciprocating direction, and a hook portion Pc continuously formed on one edge of the plate body Pb on the side facing the inner chain member 120, the hook facing the backward direction. The outer plates 132 and middle plates 133 have the pairs of first pin holes 134 in their plate bodies Pb, and the inner plates 137 have the pairs of second pin holes 138 in their plate bodies Pb.

In the embodiment illustrated in FIG. 1 through FIG. 6, the first link plates 121 and 131 and the second link plates 126 and 136 of the inner chain member 120 and the outer chain member 130 are each made up of two plate elements. Instead, each link plate may be made of two or more stacked plate elements, or a single thick plate element.

The first link plates 121 and 131 and the second link plates 126 and 136 either have a laminated structure, or are made of a plate element having a substantial thickness, so that the link plates can together bear the tensile stress that causes deflection in the interlocking chain 110. This helps prevent an excessive stress from being generated around the first pin holes 124 and second pin holes 134 in each of the link plates of the inner chain member 120 and outer chain member 130.

The drive unit 140 includes, as shown in FIG. 2, a pin guide 141 having guide grooves 142 positioned on both sides of the interlocking chain 110 for guiding the connecting pins 125 and 135, an inner guide 143 that guides the edge of the inner chain member 120 opposite to the outer chain member 130, an outer guide 144 that guides the edge of the outer chain member 130 opposite to the inner chain member 120, and a drive sprocket 145 that drives the interlocking chain by engaging the connecting pins 125 of the inner chain member 120. The drive sprocket 145 is rotatable in both forward and reverse directions, and positioned to be able to engage the protruding portions of the connecting pins 125 on both sides in the width direction of the inner chain member 120 in a section where the inner chain member 120 moves along a curved path to mesh with the outer chain member 130.

In the drive unit 140, when the drive sprocket 145 is driven by a motor (not shown) to rotate in the forward direction, the inner chain member 120 and the outer chain member 130 that are accommodated in housing sections (not shown) are reeled out, meshing with each other as they are guided by the guide grooves 142, and exit as the united interlocking chain 110. When the drive sprocket 145 is driven to rotate in the reverse direction, the inner chain member 120 and the outer chain member 130 separate from each other and are accommodated in their housing sections in the drive unit 140.

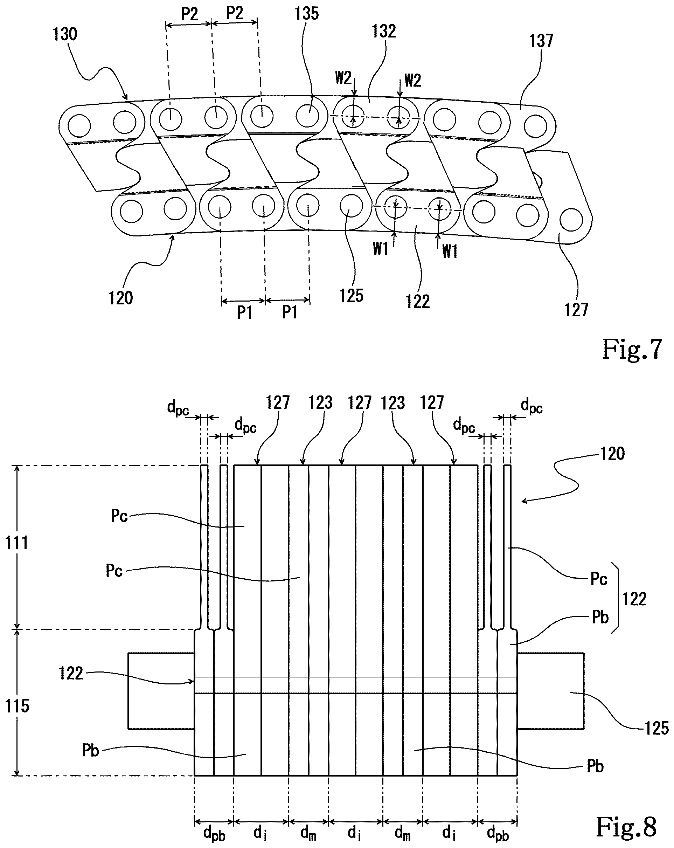

As illustrated in FIG. 7, the first distance P1 between the center axes of the adjacent connecting pins 125 of the inner chain member 120 is set smaller than the second distance P2 between the center axes of the adjacent connecting pins 135 of the outer chain member 130. Therefore, when the inner chain member 120 and the outer chain member 130 engage with each other, the interlocking chain 110 is curved toward the side of the inner chain member 120, so that the chain can drive the movable member 105 back and forth along a curved path.

Moreover, the third distance W1, which is the distance from the edge of the outer plate 122 of the inner chain member 120 on the side opposite to the outer chain member 130 to the center axis of the connecting pin 125, is set larger than the fourth distance W2, which is the distance from the edge of the outer plate 132 of the outer chain member 130 on the side opposite to the inner chain member 120 to the center axis of the connecting pin 135.

The middle plates 123 and the inner plates 127 of the inner chain member have the same profiles in relation to the middle plates 133 and the inner plates 137 of the outer chain member.

This design enhances the tensile load capacity of the inner chain member 120 and prevents damage even when the inner chain member 120 is significantly curved or substantially extended in applications where it may be subjected to a high localized tensile force near the ends of the curved section, as shown in FIG. 13.

The inner chain member 120 of the interlocking chain 110 in this embodiment includes specific pairs of first link plates 121 and second link plates 126 (hereinafter referred to as "variable-plate-thickness link-plate pairs) adjoining each other in the reciprocating direction. Each of these pairs has a smaller total plate thickness, measured in the chain width direction, in an interlocking portion where the inner chain member 120 and the outer chain member 130 engage each other, than a total plate thickness measured in the chain width direction in a connecting portion where they are coupled together by connecting pins 125. The outer chain member 130 also includes variable-plate-thickness link-plate pairs among the pairs of first link plates 131 and second link plates 136 adjoining each other in the reciprocating direction.

In the inner chain member 120 of this embodiment, as shown in FIG. 8, the middle plates 123 and inner plates 127 are link plates respectively having constant plate thicknesses of dm and di, whereas the outer plates 122 are variable-plate-thickness link plates, each composed of two plate elements, whose combined thickness dpc of the hook portions Pc is smaller than the thickness dpb of the plate body Pb. Thus the variable-plate-thickness link-plate pairs are formed, each of which has a smaller total plate thickness, measured in the chain width direction, in the interlocking portion 111 formed by the hook portions Pc of respective link plates than the total plate thickness measured in the chain width direction in the connecting portion 115 formed by the plate bodies Pb of respective link plates.

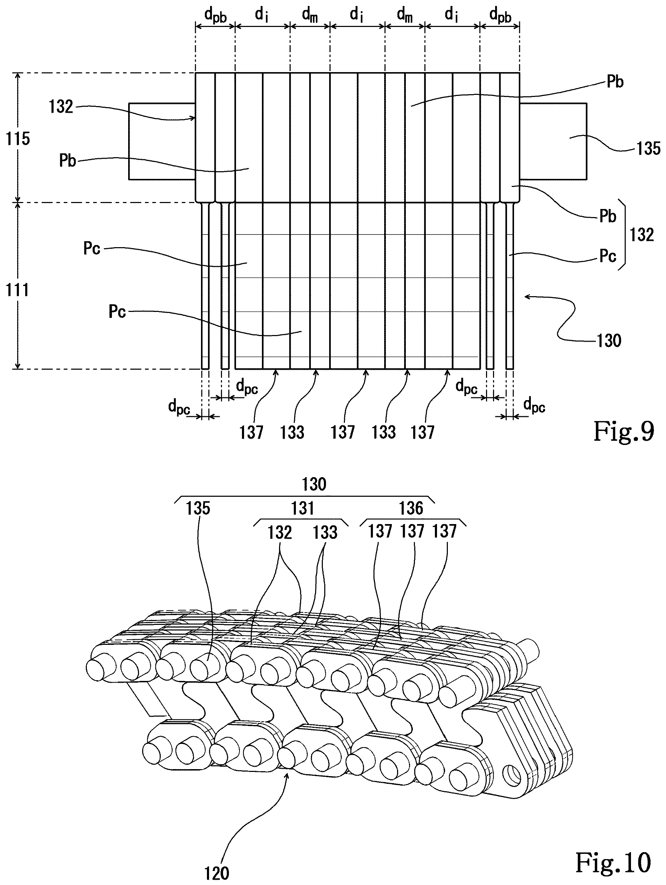

Similarly, in the outer chain member 130, as shown in FIG. 9, the middle plates 133 and inner plates 137 are link plates respectively having constant plate thicknesses of dm and di, whereas the outer plates 132 are variable-plate-thickness link plates, each composed of two plate elements, whose combined thickness dpc of the hook portions Pc is smaller than the thickness dpb of the plate body Pb. Thus the variable-plate-thickness link-plate pairs are formed, each of which has a smaller total plate thickness, measured in the chain width direction, in the interlocking portion 111 formed by the hook portions Pc of respective link plates than the total plate thickness measured in the chain width direction in the connecting portion 115 formed by the plate bodies Pb of respective link plates.

Some of the first link plates of the inner chain member 120 have a different plate thickness than that of the second link plates. In this embodiment, the plate thickness dpb of the plate body Pb of each outer plate 122 (first link plate 121) and the plate thickness dm of each middle plate 123 (first link plate 121) are the same, but different from the plate thickness di of each inner plate 127 (second link plate 126). The same applies to the outer chain member 130.

The first link plates 121 and second link plates 126, having different plate thicknesses, are designed so that the combined surface contact area between the interlocking first link plates 121 and 131 of the inner chain member 120 and outer chain member 130 is equal to the combined surface contact area between the interlocking second link plates 126 and 136 of the inner chain member 120 and outer chain member 130, without changing the side profiles of the plates. This design allows the first link plates 121 and 131, and the second link plates 126 and 136, to have equal load capacity, enabling the chain as a whole to exhibit high compression load capacity and to maximize the drive force relative to its occupied area.

In the interlocking chain 110 described above, each link plate of the inner chain member 120 and outer chain member 130 basically has a sufficient plate thickness in the connecting portion 115 to provide the effect of reducing stress generated around the first pin holes 124 and 134 and second pin holes 128 and 138 of respective link plates of the inner and outer chain members 120 and 130. Since the inner chain member 120 and outer chain member 130 both include the variable-plate-thickness link-plate pairs, the surface contact area between the inner chain member 120 and outer chain member 130 in their respective interlocking portions 111 can be minimized. This enables the reduction of friction as well as engagement noise.

Moreover, the inner chain member 120 and outer chain member 130 can be made lighter, thereby reducing the thrust required from the drive source to reciprocate the interlocking chain 110. The reduced load extends the service life of the drive source, and enables the use of a smaller drive source, allowing the movable-member actuator 100 itself, which uses the interlocking chain 110, to be made lighter. When employed in a drive unit for opening and closing truck wing doors, for example, the lighter interlocking chain 110 can reduce the moment generated by lateral loads on the trucks, thereby minimizing the risk of truck tip-overs and ensuring operational safety.

While a preferred embodiment of the present invention has been described above, the present invention is not limited to the above-described configuration.

In the embodiment described above, for example, both of the outer chain member and inner chain member include variable-plate-thickness link-plate pairs. Instead, one of the outer chain member and inner chain member may include variable-plate-thickness link-plate pairs.

In the embodiment described above, all of the link plate pairs in each of the outer chain member and inner chain member are variable-plate-thickness link-plate pairs. Instead, some of the link plates may be variable-plate-thickness link-plate pairs.

In the embodiment described above, the outer plates are formed as variable-plate-thickness link plates to constitute the variable-plate-thickness link-plate pairs. Instead, one of the middle plates and inner plates may be formed as variable-plate-thickness link plates, or two types of the link plates selected from the outer plates, middle plates, and inner plates may be formed as variable-plate-thickness link plates.

In the embodiment described above, at least one type of the link plates selected from the outer plates, middle plates, and inner plates is formed as variable-plate-thickness link plates to constitute the specific link plate pairs. Instead, at least one of the outer plates, middle plates, and inner plates may be formed as link plates without the hook portions, to constitute the specific link plate pairs. One configuration example of such an interlocking chain is shown in FIG. 10 through FIG. 12.

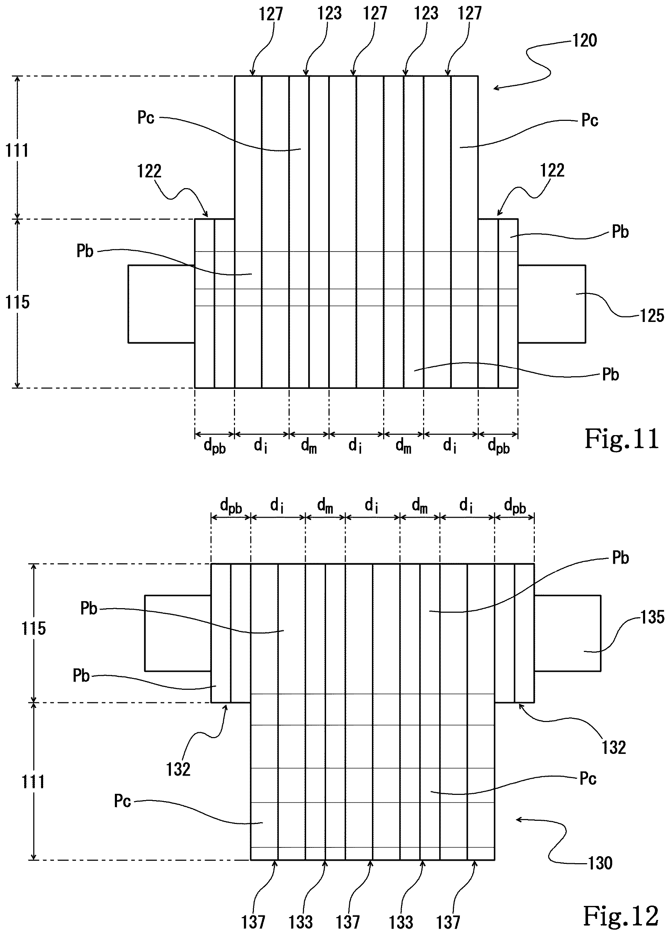

The inner chain member 120 of the interlocking chain 110 according to this embodiment is made up of outer plates 122, middle plates 123, and inner plates 127 respectively having constant plate thicknesses dpb, dm, and di, as shown in FIG. 11. The outer plates 122 are formed as link plates without the hook portions Pc. As a result, there are formed specific link plate pairs, each of which has a smaller total plate thickness, measured in the chain width direction, in the interlocking portion 111 formed by the hook portions Pc of the middle plates 123 and inner plates 127 than the total plate thickness measured in the chain width direction in the connecting portion 115 formed by the plate bodies Pb of respective link plates.

Similarly, as shown in FIG. 12, the outer chain member 130 is made up of outer plates 132, middle plates 133, and inner plates 137 respectively having constant plate thicknesses dpb, dm, and di. The outer plates 132 are formed as link plates without the hook portions Pc. As a result, there are formed specific link plate pairs, each of which has a smaller total plate thickness, measured in the chain width direction, in the interlocking portion 111 formed by the hook portions Pc of the middle plates 133 and inner plates 137 than the total plate thickness measured in the chain width direction in the connecting portion 115 formed by the plate bodies Pb of respective link plates.

In this embodiment, too, only one of the outer chain member and inner chain member of the interlocking chain may include the variable-plate-thickness link-plate pairs, and only some of the link plate pairs may be the specific link plate pairs. The middle plates or inner plates may be formed as link plates without hook portions to constitute the specific link plate pairs. Alternatively, two types of the link plates selected from the outer plates, middle plates, and inner plates may be formed without the hook portions to constitute the specific link plate pairs.

Moreover, in the embodiment described above, the first link plates, i.e., all of the outer plates and middle plates, are designed to have a different plate thickness in the plate body than the plate thickness in the plate body of the second link plates. Instead, some of the outer plates and middle plates may be designed to have a different plate thickness in the plate body than the plate thickness in the plate body of the second link plates. Namely, the outer plates and middle plates need not all have the same plate thickness. The same applies to the second link plates.

Further, the interlocking chain can be configured using two or more pairs of inner chain members and outer chain members.

## Claims

1. An interlocking chain comprising at least a pair of reciprocally movable inner and outer chain members that engage with each other to unite when moving forward, and disengage from each other to separate when moving backward,
the inner chain member and the outer chain member each being made up of a plurality of first link plates, each having a pair of first pin holes arranged along a reciprocating direction, and a plurality of second link plates, each having a pair of second pin holes arranged along the reciprocating direction, the first link plates and the second link plates being serially arranged and pivotably connected together by connecting pins passed through the first pin holes and the second pin holes, with the first pin hole on one side in each of the first link plates overlapping the second pin hole on another side in each of the second link plates that are adjacent in the reciprocating direction,
the connecting pins of the inner chain member being spaced apart along the reciprocating direction by a first distance, the connecting pins of the outer chain member being spaced apart along the reciprocating direction by a second distance, the first distance being smaller than the second distance,
at least one of the inner chain member and the outer chain member including specific link plate pairs of the first link plates and the second link plates adjoining each other in the reciprocating direction, whose combined plate thickness, measured in a chain width direction, is smaller in an interlocking portion where the inner chain member and the outer chain member engage than a combined plate thickness measured in the chain width direction in a connecting portion where the link plates are connected together by the connecting pins.

2. The interlocking chain according to claim 1, wherein the first link plates include pairs of outer plates arranged in a width direction and middle plates disposed between the outer plates,
the second link plates include a plurality of inner plates arranged between the outer plates and the middle plates, or between the outer plates and the middle plates as well as between the middle plates,
the outer plates, the middle plates, and the inner plates each include a plate body that forms the connecting portion, and a hook portion that forms the interlocking portion,
at least one type of the link plates selected from the outer plates, the middle plates, and the inner plates in the specific link plate pairs has a plate thickness in the hook portion that is smaller than a plate thickness in the plate body.

3. The interlocking chain according to claim 1, wherein the first link plates include link plates having a different plate thickness than a plate thickness of the second link plates.

4. The interlocking chain according to claim 1, wherein center axes of the connecting pins of the inner chain member are spaced from an edge of the inner chain member on a side opposite to the outer chain member by a third distance; center axes of the connecting pins of the outer chain member are spaced from an edge of the outer chain member on a side opposite to the inner chain member by a fourth distance; and the third distance is greater than the fourth distance.
